# EUROPÄISCHE PATENTSCHRIFT

(11) **EP 3 659 813 B1**
(45) Veröffentlichungstag und Bekanntmachung des Hinweises auf die Patenterteilung: **11.01.2023**
(21) Anmeldenummer: 18208751.0
(22) Anmeldetag: 28.11.2018
(51) Int. Cl.: H04N 1/00, B41J 2/21, B41J 2/165, B41J 13/22, B41J 29/393

(54) **VARIABLE DRUCKKONTROLLSTREIFEN**
VARIABLE PRINT CONTROL BARS
BANDES DE CONTRÔLE D'IMPRESSION VARIABLES

(43) Veröffentlichungstag der Anmeldung: 03.06.2020
(73) Patentinhaber: Heidelberger Druckmaschinen AG, 69115 Heidelberg (DE)
(72) Erfinder: Tita, Ralf, 69434 Hirschhorn (DE); Stegmaier, Daniel, 69207 Sandhausen (DE); Mayer, Martin, 68526 Ladenburg (DE); Junghans, Gerd, 68723 Schwetzingen (DE)

(56) Entgegenhaltungen:
- JP-A- 2013 059 903
- US-A1- 2008 211 852
- US-A1- 2016 052 317
- US-A1- 2016 214 421

## Beschreibung

Die Erfindung beschäftigt sich mit einem Verfahren zur Detektion defekter Druckdüsen in einer Inkjet-Druckmaschine mit einem variablen Druckkontrollstreifen.

Die Erfindung liegt im technischen Gebiet der Qualitätskontrolle.

In der heutigen Druckindustrie wird insbesondere bei größeren Druckmaschinen die Qualitätskontrolle automatisiert über sogenannte Inline-Inspektionssysteme, im Weiteren als Bilderfassungssystem bezeichnet, durchgeführt. Inline bedeutet in diesem Fall, dass das Bilderfassungssystem, genauer gesagt die Kamera des Bilderfassungssystems, in der Druckmaschine angebracht ist. Sie wird dabei üblicherweise nach dem letzten Druckwerk oder, falls vorhanden, einer weiteren Nachbearbeitungsstation, wie zum Beispiel einem Lackwerk, angebracht und erfasst die von der Druckmaschine erzeugten Druckprodukte. Es kann sich dabei um eine Kamera oder auch um ein Kamerasystem mit mehreren Kameras handeln. Auch ist der Einsatz anderer Bildsensoren möglich. Vereinfachend wird im Folgenden jedoch von "Kamera" gesprochen. Die derart mittels der Kamera erzeugten digitalen Druckbilder werden dann in einem Bildverarbeitungsrechner mit entsprechenden Gutbildern des Drucksujets abgeglichen. Diese Gutbilder können dabei entweder aus den Vorstufendaten erstellt werden oder sie werden eingelernt. Einlernen bedeutet in diesem Fall, dass eine Reihe von Druckprodukten mit dem zu erzeugenden Drucksujet gedruckt und von der Kamera des Bilderfassungssystems erfasst wird. Diese Musterdrucke sollten möglichst fehlerfrei sein und werden daher nach Erfassen durch das Bilderfassungssystem als digitale Referenz im Bildverarbeitungsrechner als Gutbild hinterlegt. Im Fortdruckprozess werden dann durch die Kamera des Bilderfassungssystems das erzeugte Druckbild oder Teile davon erfasst und mit der digital eingelernten oder der aus den Vorstufendaten erstellten Gutbildreferenz abgeglichen. Werden dabei Abweichungen zwischen den im Fortdruck produzierten Druckprodukten und der digitalen Referenz festgestellt, so werden diese Abweichungen dem Drucker angezeigt, welcher dann entscheiden kann, ob diese Abweichungen akzeptabel sind oder ob die derart erzeugten Druckprodukte als Makulatur zu entfernen sind. Die als Makulatur erkannten Druckbögen können über eine Makulaturweiche ausgeschleust werden.

Ein sehr spezifisches Problem, welches die Inspektion eben in dieser Hinsicht negativ beeinflusst, stellen Unregelmäßigkeiten beim Drucksubstrattransport innerhalb der Druckmaschine dar. Das Bilderfassungssystem ist für eine gute Bildaufnahme darauf angewiesen, dass das transportierte Drucksubstrat an der Kamera des Bilderfassungssystems möglichst ruhig und gleichmäßig vorbeitransportiert wird. Da der Druckbogen von Greifern gehalten wird und diese unter den Druckköpfen durchlaufen, muss die Bogenhinterkante und ggf. auch die Bogenvorderkante abgesenkt sein. Durch diese Absenkung ändert sich der Abbildungsabstand Kamerazu Drucksubstrat. Dies führt dann zu einer leichten, sich verändernden Unschärfe in Form einer nichtlinearen Verzerrung im erfassten Druckbild. Da diese Unschärfe in der digitalen Referenz natürlich nicht vorhanden ist, wird sie bei einem Abgleich des erfassten, aufgenommenen Druckbildes mit der digitalen Referenz als Druckfehler klassifiziert. Bei einer manuellen Überwachung des Bildinspektionsverfahrens durch einen Drucker, erkennt dieser natürlich, dass es sich dabei nicht um echte Druckfehler handelt und weiß diese Fehleranzeigen dementsprechend einzuordnen. Für eine vollständig automatisierte Bildinspektion wäre es jedoch notwendig, solche Falschpositivfehler oder Pseudofehler von vorneherein auszuschließen.

In Inkjet-Druckmaschinen ist zudem das Problem defekter Druckdüsen im Druckkopf sehr verbreitet. Diese werden üblicherweise durch das fortlaufende Drucken von Druckkontrollstreifen und die anschließende Auswertung dieser Druckkontrollstreifen erfasst. Sehr verbreitet sind Druckkontrollstreifen, welche ein Düsentestmuster drucken, an welchem jede zu testende Druckdüse durch den Druck kleiner Bildobj ekte beteiligt ist. Üblicherweise bestehen diese Bildobjekte aus kleinen länglichen Linien, welche von der betreffenden Druckdüse in Druckrichtung gedruckt werden. Diese können mittels der Kamera des Bilderfassungssystems, welche üblicherweise inline in der Inkjet-Druckmaschine nach dem letzten Druckwerk installiert sind, erfasst und vom Bildverarbeitungsrechner ausgewertet. Anhand der Beschaffenheit der von jeder Druckdüse gedruckten Linie lässt sich dann der Status der betreffenden Druckdüse bewerten und defekte Druckdüsen detektieren. Aufgrund der Bildauflösung der Kamera, welche in vielen Fällen nicht wesentlich höher oder gar niedriger ist als die Druckauflösung der Inkjet-Druckmaschine, werden die linienförmigen Objekte des Düsentestmusters versetzt in mehreren Zeilen gedruckt, um somit dennoch eine sichere Auswertung des Düsentestmusters durch das Bilderfassungssystem zu gewährleisten. Es wird z.B. nur jede zehnte Druckdüse in einer Zeile des Düsentestmusters aktiv. In der ersten Zeile würde dann z.B. nur jede erste, elfte, einundzwanzigste Druckdüse drucken, in der zweiten Zeile jede zweite, zwölfte, zweiundzwanzigste usw. Ein Beispiel eines solchen Düsentestmusters wird in der US-Patentanmeldung US 2016 005 2317 A1 offenbart.

Die Düsentestmuster werden dabei üblicherweise auf dem Drucksubstrat außerhalb des eigentlich zu erzeugenden Nutzens positioniert. Im Falle eines Druckbogens ist das üblicherweise an der Bogenkante oder nahe dieser. Hier kommt nun das Problem der flatternden Bogenkanten und der dadurch erzeugten Verzerrungen im vom Bilderfassungssystem erzeugten digitalen Bild zum Tragen. Diese Verzerrungen beeinflussen natürlich auch die Auswertung der Düsentestmuster. Dabei ist die Verzerrung umso größer, je näher sich eine Zeile des Düsentestmusters an der Bogenhinterkante befindet. Diese Verzerrungen machen eine zielsichere Auswertung des Düsentestmusters und somit eine genaue Detektion defekter Druckdüsen unmöglich bzw. erschweren sie deutlich.

Die Aufgabe der vorliegenden Erfindung besteht somit darin, ein Verfahren zur Detektion defekter Druckdüsen zu finden, welches trotz eines suboptimalen Drucksubstrattransports defekte Druckdüsen zielsicher ermittelt.

Die Aufgabe wird gelöst durch ein Verfahren zur Detektion defekter Druckdüsen in Druckköpfen einer Inkjetdruckmaschine mit einem Rechner, wobei zur Detektion mehrzeilige Düsentestmuster auf das Drucksubstrat in Form von Druckbogen gedruckt werden, welche aus einer bestimmten Anzahl n horizontaler Zeilen periodisch vertikal gedruckter, gleichabständiger Linien bestehen, die in Druckrichtung untereinander angeordnet sind, wobei in jeder Zeile des Düsentestmusters jeweils nur die n-ten Druckdüsen eines Druckkopfes der Inkjetdruckmaschine aktiv sind und dadurch zu den Linien der Zeile des Düsentestmusters beitragen und von Zeile zu Zeile die aktiven Druckdüsen inkrementiert werden, die Düsentestmuster von mindestens einem Bildsensor erfasst und vom Rechner zur Ermittlung der defekten Druckdüsen ausgewertet werden, welches dadurch gekennzeichnet ist, dass die in Druckrichtung untereinander angeordneten horizontalen Zeilen periodisch vertikal gedruckter, gleichabständiger Linien in ihrer Reihenfolge von Druckbogen zu Druckbogen variiert werden. Das erfindungsgemäße Verfahren macht sich somit den Effekt zunutze, dass die Verzerrung hin zur Bogenhinterkante immer massiver wird und somit die Zeilen des Düsentestmusters, die sich näher an der Bogenhinterkante befinden, stärker betroffen sind. Da es anders als in der Bildinspektion, bei der ein Gutbild des zu testenden Bildobjektes vorliegt, beim Düsentestmuster nicht möglich ist, die Verzerrungen durch Manipulation des Gutbilds auszugleichen und somit die Bildinformationen der verzerrten horizontalen Zeilen nahe der Bogenhinterkante zu nutzen, wird hier ein anderer Ansatz verfolgt. Da das Düsentestmuster aus mehreren Zeilen besteht, von denen sich die vordersten weiter weg von der Bogenhinterkante befinden und somit weniger verzerrt sind, wird die Reihenfolge der horizontalen Zeilen, welche in einem normalen Düsentestmuster fix ist, variiert. Das Düsentestmuster muss schließlich fortlaufend von Druckbogen zu Druckbogen gedruckt werden muss, um eine konstante Überwachung des Status der verwendeten Druckdüsen zu gewährleisten. Somit ist eine solche Variation der Reihenfolge der horizontalen Zeilen problemlos möglich. Das bedeutet im Detail, dass eine Zeile, die auf einem ersten Druckbogen ganz am Rand des Druckbogens gedruckt wird und somit maximal verzerrt ist, auf dem nächsten Druckbogen wesentlich weiter oben im Testmuster und somit wesentlich weiter entfernt von der Bogenhinterkante und damit wesentlich weniger verzerrt ist. Auch wenn sie beim ersten Druckbogen nicht ausgewertet werden kann, da die Verzerrungen zu groß sind, kann sie es dafür beim nächsten Druckbogen. Dies führt zwar dazu, dass die Prüfintervalle für jede einzelne Druckdüse im erfindungsgemäßen Verfahren etwas länger sind als ohne diese Variation. Dafür kann hier gewährleistet werden, dass auch wirklich jede Druckdüse regelmäßig überprüft wird. Da zudem moderne Inkjet-Druckmaschinen relativ viele Druckbögen in einer kurzen Zeit bedrucken können, ist auch mit dem erfindungsgemäßen Variieren der Reihenfolge der horizontalen Zeilen eine regelmäßige Überprüfung aller Druckdüsen im Düsentestmuster gewährleistet. Das etwas niedrigere Intervall stellt dabei kein Problem dar.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass das mehrzeilige Düsentestmuster an der Hinterkante des Druckbogens gedruckt wird. Das erfindungsgemäße Verfahren ist natürlich nur dann notwendig, wenn das Düsentestmuster nahe der Hinterkante des Druckbogens gedruckt wird. Befindet es sich weiter in der Mitte des Druckbogens, sind die Effekte der Verzerrung eher gering und der Einsatz des erfindungsgemäßen Verfahrens nicht notwendig. Da die Variation der Reihenfolge der horizontalen Zeilen jedoch in diesem Fall nicht dazu führt, dass das Prüfintervall jeder einzelnen Druckdüse beeinflusst wird, ist es zumindest auch nicht nachteilig.

Eine weitere bevorzugte Weiterbildung des erfindungsgemäßen Verfahrens ist dabei, dass die Reihenfolge der horizontalen Zeilen periodisch vertikal gedruckter, gleichabständiger Linien nach einem bestimmten Muster oder zufallsmäßig angepasst wird. Die Veränderung der Reihenfolge kann dabei zufallsmäßig vorgenommen werden, d.h. es gibt kein festes System, nach welchem z.B. die erste Zeile innerhalb des Düsentestmusters verschoben wird. Es führt zu einem quasi Durcheinanderwürfeln der einzelnen horizontalen Zeilen. Die Zeilen können jedoch auch nach einer bestimmten Vorschrift, also einem bestimmten Muster, variiert werden. Das einfachste Muster ist dabei sicherlich die Umkehrung des Düsentestmusters, d.h. die erste Zeile ist die letzte und die letzte die erste usw.

Eine weitere bevorzugte Weiterbildung des erfindungsgemäßen Verfahrens ist dabei, dass die Variation der Reihenfolge der horizontalen Zeilen periodisch vertikal gedruckter, gleichabständiger Linien fortlaufend durch ein systematisches Inkrementieren und Schieben der jeweiligen Zeilennummern im Düsentestmuster erfolgt. Zusätzlich zu dem einmaligen Durcheinanderbringen, welches natürlich den Nachteil hat, dass die Zeile, welche sich danach am nächsten an der Bogenhinterkante befindet, nicht vernünftig ausgewertet werden kann, ist eine regelmäßige Veränderung der Reihenfolge der horizontalen Zeilen angebracht. Damit kann der positive Effekt, dass jede Druckdüse im Düsentestmuster sich regelmäßig einmal an einer besser auswertbaren Stelle befindet, erst seine volle Wirkung entfalten. Dies kann z.B. so geschehen, dass jede Zeile in bestimmten Intervallen einfach systematisch in ihrer Position um eins inkrementiert wird. Dies ist sicherlich die einfachste Art der fortlaufenden Variation der Reihenfolge der horizontalen Zeilen. Es sind jedoch auch höhere Inkrementierungsintervalle möglich.

Eine weitere bevorzugte Weiterbildung des erfindungsgemäßen Verfahrens ist dabei, dass die Variation der Reihenfolge der horizontalen Zeilen periodisch vertikal gedruckter, gleichabständiger Linien fortlaufend durch ein zufallsbasiertes Verändern der jeweiligen Zeilennummern im Düsentestmuster erfolgt. Der andere Ansatz besteht darin, die fortlaufende Variation der Reihenfolge ebenfalls zufallsbasiert durchzuführen. Dies bedeutet, dass von Variation zu Variation die Reihenfolge der horizontalen Zeilen regelmäßig zufallsmäßig durcheinandergewürfelt wird. Dabei ist es, genau wie im Fall der inkrementellen Variation, egal, ob das Düsentestmuster noch in seiner ursprünglichen Reihenfolge von Zeile 1 bis x existiert, oder ob es in einem ersten vorhergehenden Schritt bereits einmalig angepasst und verändert wurde.

Eine weitere bevorzugte Weiterbildung des erfindungsgemäßen Verfahrens ist dabei, dass die Variation der Reihenfolge der horizontalen Zeilen periodisch vertikal gedruckter, gleichabständiger Linien bei jedem Druckbogenwechsel oder ab einer bestimmten Anzahl von bedruckten Druckbogen erfolgt. Wie oft die Variation der Reihenfolge der horizontalen Zeilen geschieht, ist zuallererst eine Frage des Folgeaufwandes, den diese Variation mit sich bringt. Meist ist bei Auswertung der Düsentestmuster die Zuordnung von erfasster Linie zu der entsprechenden Druckdüse, welche diese Linie gedruckt hat, relativ komplex. Diese Zuordnung wird natürlich erschwert, je häufiger die Reihenfolge der horizontalen Zeilen gewechselt wird und je häufiger sich somit eine Linie an einer anderen Position im Düsentestmuster befindet. Der extremste Fall ist natürlich die Variation bei jedem Druckbogenwechsel. Andererseits wird damit wird natürlich auch das maximal mögliche Intervall jeder einzelnen Druckdüse trotz Verzerrung gewährleistet. Bei einer Variation ab einer bestimmten Anzahl von bedruckten Druckbogen sinkt somit der Aufwand, dafür verringert sich jedoch auch das Prüfintervall von Düsen, die im Bereich der höchsten Verzerrung im Düsentestmuster liegen. Hier muss ein guter Mittelweg gefunden werden.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: schematisch ein Bilderfassungssystem in einer Inkjet-Druckmaschine
- Figur 2:: strukturell die Bildaufnahme des Druckdüsen-Testmusters
- Figur 3:: ein Beispiel einer resultierenden, lokalen Bildverzerrung an der Bogenhinterkante auf einem Druckbogen
- Figur 4:: ein Druckdüsen-Testmuster mit originaler Zeilen-Reihenfolge
- Figur 5:: das Druckdüsen-Testmuster mit zufällig variierter Zeilen-Reihenfolge
- Figur 6:: das Druckdüsen-Testmuster mit zweifach zufällig variierter Zeilen-Reihenfolge

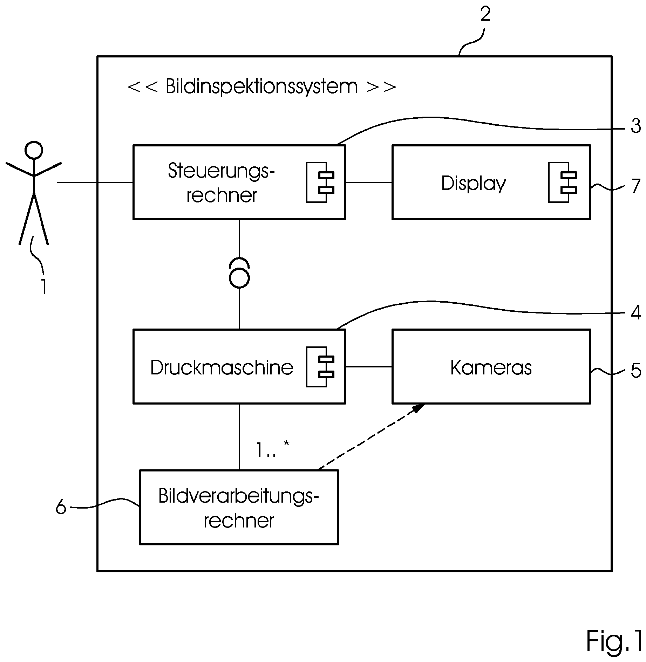

Figur 1 zeigt ein Beispiel für ein Bilderfassungssystem 2, welches das erfindungsgemäße Verfahren einsetzt. Es besteht aus mindestens einem Bildsensor 5, üblicherweise einer Kamera 5, welche in die Bogen-Druckmaschine 4 integriert ist. Die mindestens eine Kamera 5 nimmt die von der Druckmaschine 4 erzeugten Druckbilder auf und sendet die Daten an einen Rechner 3, 6 zur Auswertung. Dieser Rechner 3, 6 kann ein eigener separater Rechner 6 sein, z.B. ein oder mehrere spezialisierte Bildverarbeitungsrechner 6, oder auch mit dem Steuerungsrechner 3 der Druckmaschine 4 identisch sein. Mindestens der Steuerungsrechner 3 der Druckmaschine 4 besitzt ein Display 7, auf welchem die Ergebnisse der Bildinspektion dem Anwender 1 angezeigt werden.

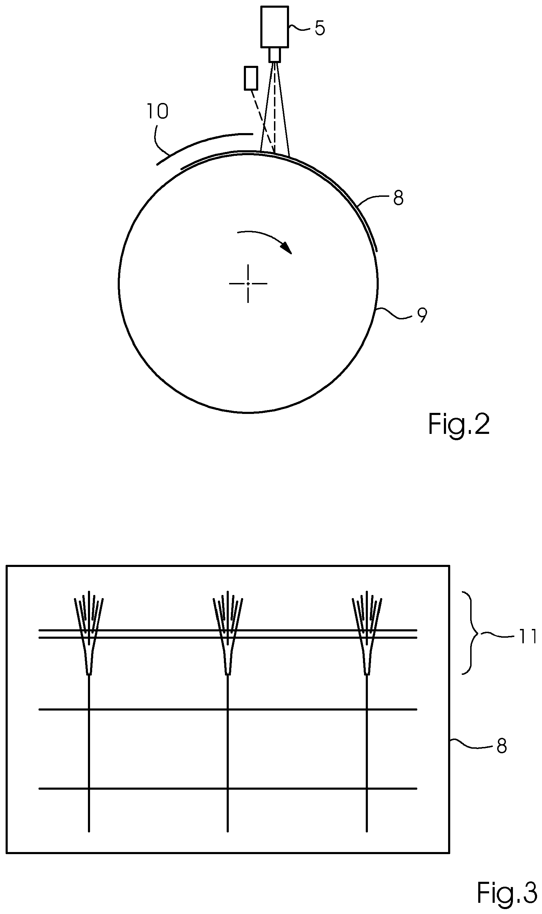

Beim Transport des Druckbogens 8 in der Inkjet-Druckmaschine kommt es nun zu der beschriebenen Absenkung des Druckbogen, welches sich wiederum auf die Bildaufnahme der Kamera 1 des verwendeten Bilderfassungssystems negativ auswirkt. Dieser Sachverhalt ist in Figur 2 strukturell dargestellt. Gut lässt sich hier erkennen, wie der Bogentransport über den Druckzylinder 9 durch das Bogenleitblech 10 gesteuert wird.

Sobald das Bogenende unter den Druckköpfen durchläuft, muss es entsprechend abgesenkt werden um eine Kollision mit den Druckköpfen zu vermeiden, welche andernfalls die Druckköpfe beschädigen würde. Die Kamera 5, die kurz nach dem Druckwerk installiert ist, erfasst den gerade gedruckten Bogen 8 und leitet das so erfasste digitale Druckbild an den entsprechenden Bildverarbeitungsrechner 6 weiter. Durch das Absenken des Druckbogens 8 verändert sich der Abstand zwischen dem bedruckten Bogen 8 und der Kamera 5 leicht. Dadurch kommt es zu leichten Unschärfen am Ende des abgesenkten Druckbogens 8. Diese Unschärfen verursachen die Bereiche mit den lokalen, nichtlinearen Verzerrungen 11 im Druckbild, welche die Pseudofehler in der Bildinspektion verursachen, die bisher vom Anwender 1 der Druckmaschine 4 manuell bewertet werden müssen.

Ein Beispiel eines solchen Druckbildes 8 mit lokaler, nichtlinearer Verzerrung 11 am Bogenende ist in Figur 3 schematisch dargestellt. Wie man hier gut erkennen kann, sind die lokalen Verzerrungen 11 nicht existent am Anfang und in der Mitte des Druckbogens 8, bzw. des entsprechenden Druckbildes. Sie entstehen bzw. verschärfen sich aber, je mehr sich das Druckbild dem Bogenende nähert. Da sich nun die für die Überprüfung der Druckdüsen der Inkjet-Druckmaschine 4 zeilenförmig aufgebaute Düsentestmuster 13 meist an eben diesem Bogenende befinden, werden sie von den lokalen Verzerrungen 11 entsprechend beeinträchtigt.

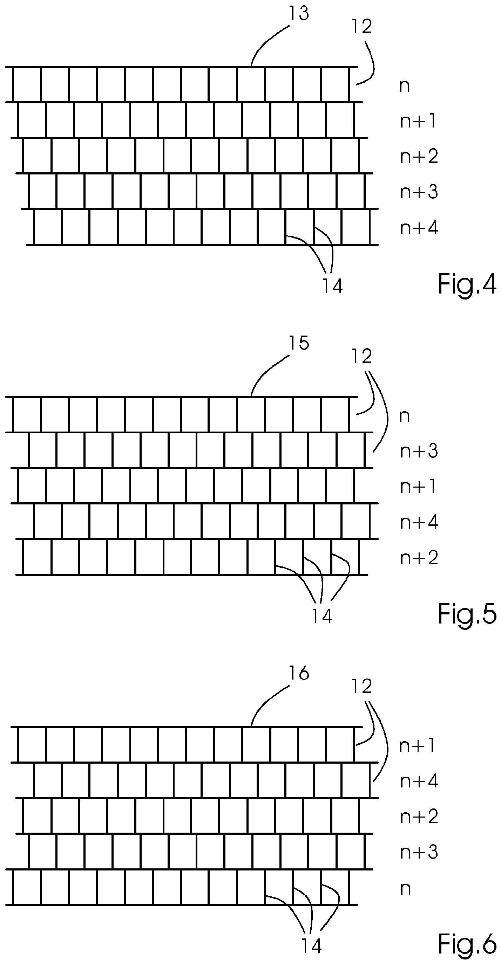

Das erfindungsgemäße Verfahren zur Kompensation dieser Beeinträchtigung wird in einer bevorzugten Ausführungsvariante im Folgenden anhand mehrerer Figuren weiter erläutert. Figur 4 zeigt dabei den standardmäßigen Aufbau eines Düsentestmusters 13, bestehend aus mehreren horizontalen Zeilen 12 von linienförmigen Objekten 14. Es beginnt mit Zeile n, in welcher jede x-te Druckdüse eines Druckkopfes bzw. einer Druckleiste eine vertikale Linie 14 druckt. Dies kann z.B. jede zehnte Druckdüse sein. In der darunterliegenden Zeile n+1 druckt dann jede darauffolgende Düse, z.B. jede zweite, zwölfte usw., also wieder jede zehnte. So setzt sich fortlaufend das Düsentestmuster 13 mit den einzelnen Zeilen 12 fort, bis sämtliche Druckdüsen einmal eine vertikale Linie 14 gedruckt haben. Diese Reihenfolge wird nun zufallsmäßig durcheinandergewürfelt. Figur 5 zeigt den Aufbau eines solchen variierten Düsentestmusters 15 mit einer zufälligen Reihenfolge der horizontalen Zeilen 12. Das nächste Düsentestmuster 16 im nächsten Druckbogen 8 mit einem Düsentestmuster 16 wird nun weiterhin erneut durcheinandergewürfelt. Figur 6 zeigt die neu variierte Reihenfolge der horizontalen Zeilen 12.

Mittels der erfindungsgemäßen Variation der Zeilen-Reihenfolge des Düsentestmusters 13, 15, 16 kann somit sichergestellt werden, dass keine Zeile 12 immer am untersten Ende des Düsentestmusters 13, 15, 16, damit immer am Rand der Bogenhinterkante positioniert ist und somit nicht ausgewertet werden kann. Denn ohne erfindungsgemäße Variation werden systematische Messfehler, die aus der Position des Messmusters relativ zur Bogenhinterkante resultieren, erzeugt. Das heißt einzelne Düsengruppen hätten einen größeren Messfehler, bzw. Druckfehler als andere. Durch die Variation wird dieser Fehler über alle Druckdüsen gleichmäßig gemittelt. Auf diese Weise lässt sich eine kontinuierliche Bewertung des Status jeder einzelnen Druckdüse sicherstellen.

### Bezugszeichenliste

- 1: Anwender
- 2: Bilderfassungssystem
- 3: Steuerungsrechner
- 4: Inkjet-Druckmaschine
- 5: Bildsensor / Kamera
- 6: Bildverarbeitungsrechner
- 7: Display
- 8: Druckbogen
- 9: Druckzylinder
- 10: Leitblech
- 11: Bereiche mit lokalen Verzerrungen
- 12: Zeile des Druckdüsen-Testmusters
- 13: originales Druckdüsen-Testmuster
- 14: von Druckdüse erzeugtes, linienförmiges Druckobjekt des Druckdüsen-Testmusters
- 15, 16: Druckdüsen-Testmuster mit variierter Zeilenreihenfolge

## Patentansprüche

1. Verfahren zur Detektion defekter Druckdüsen in Druckköpfen einer Inkjetdruckmaschine (4) mit einem Rechner (3, 6), wobei zur Detektion mehrzeilige Düsentestmuster (13, 15, 16) auf das Drucksubstrat in Form von Druckbogen (8) gedruckt werden, welche aus einer bestimmten Anzahl n horizontaler Zeilen (12) periodisch vertikal gedruckter, gleichabständiger Linien (14) bestehen, die in Druckrichtung untereinander angeordnet sind, wobei in jeder Zeile (12) des Düsentestmusters (13) jeweils nur die n-ten Druckdüsen eines Druckkopfes der Inkjetdruckmaschine (7) aktiv sind und dadurch zu den Linien (14) der Zeile (12) des Düsentestmusters (13, 15, 16) beitragen und von Zeile (12) zu Zeile (12) die aktiven Druckdüsen inkrementiert werden, die Düsentestmuster (13, 15, 16) von mindestens einem Bildsensor (5) erfasst und vom Rechner (3, 6) zur Ermittlung der defekten Druckdüsen ausgewertet werden,
**dadurch gekennzeichnet,**
**dass** die in Druckrichtung untereinander angeordneten horizontalen Zeilen (12) periodisch vertikal gedruckter, gleichabständiger Linien (14) in ihrer Reihenfolge von Druckbogen (8) zu Druckbogen (8) variiert werden.

2. Verfahren nach Anspruch 1,
**dadurch gekennzeichnet,**
**dass** das mehrzeilige Düsentestmuster (13, 15, 16) an der Hinterkante des Druckbogens (8) gedruckt wird.

3. Verfahren nach einem der vorherigen Ansprüche,
**dadurch gekennzeichnet,**
**dass** die Reihenfolge der horizontalen Zeilen (12) periodisch vertikal gedruckter, gleichabständiger Linien (14) nach einem bestimmten Muster oder zufallsmäßig angepasst wird.

4. Verfahren nach einem der vorherigen Ansprüche,
**dadurch gekennzeichnet,**
**dass** die Variation der Reihenfolge der horizontalen Zeilen (12) periodisch vertikal gedruckter, gleichabständiger Linien (14) fortlaufend durch ein systematisches Inkrementieren und Schieben der jeweiligen Zeilennummern im Düsentestmuster (13, 15, 16) erfolgt.

5. Verfahren nach einem der Ansprüche 1 bis 3,
**dadurch gekennzeichnet,**
**dass** die Variation der Reihenfolge der horizontalen Zeilen (12) periodisch vertikal gedruckter, gleichabständiger Linien (14) fortlaufend durch ein zufallsbasiertes Verändern der jeweiligen Zeilennummern im Düsentestmuster (13, 15, 16) erfolgt.

6. Verfahren nach einem der vorherigen Ansprüche,
**dadurch gekennzeichnet,**
**dass** die Variation der Reihenfolge der horizontalen Zeilen (12) periodisch vertikal gedruckter, gleichabständiger Linien (14) bei jedem Druckbogenwechsel oder ab einer bestimmten Anzahl von bedruckten Druckbogen (8) erfolgt.

## Claims

1. Method of detecting defective printing nozzles in printing heads of an inkjet printing machine (4) with a computer (3, 6), wherein multi-row nozzle test charts (13, 15, 16) are printed onto the printing substrate in the form of printing sheets (8) for detection purposes, said nozzle test charts consisting of a specified number n of horizontal rows (12) of equidistant vertical lines (14) printed periodically and disposed underneath one another in the printing direction, wherein only every nth printing nozzle of a printing head of the inkjet printing machine (7) is active in every row (12) of the nozzle test chart (13) and thus contributes to the lines (14) in the row (12) of the nozzle test chart (13, 15, 16), wherein the active printing nozzles are incremented from row (12) to row (12), and wherein the nozzle test charts (13, 15, 16) are recorded by at least one image sensor (5) and analyzed by the computer (3, 6) to determine the defective printing nozzles,
**characterized**
**in that** the order of the horizontal rows (12) of vertical equidistant lines (14) printed periodically and underneath one another in the printing direction is varied from printing sheet (8) to printing sheet (8).

2. Method according to claim 1,
**characterized**
**in that** the multi-row nozzle test chart (13, 15, 16) is printed onto the trailing edge of the printing sheet (8).

3. Method according to any one of the preceding claims,
**characterized**
**in that** the order of the horizontal rows (12) of equidistant vertical lines (14) printed periodically is adapted in accordance with a specified pattern or in a random way.

4. Method according to any one of the preceding claims,
**characterized**
**in that** the variation of the order of the horizontal rows (12) of equidistant vertical lines (14) printed periodically is done continuously by systematically incrementing and shifting the respective row numbers in the nozzle test chart (13, 15, 16).

5. Method according to any one of claims 1 to 3,
**characterized**
**in that** the variation of the order of the horizontal rows (12) of equidistant vertical lines (14) printed periodically is done continuously by changing the respective row numbers in the nozzle test chart (13, 15, 16) in a randomized way.

6. Method according to any one of the preceding claims,
**characterized**
**in that** the variation of the order of the horizontal rows (12) of equidistant vertical lines printed periodically is done at every print sheet change or starting from a specified number of printed printing sheets (8).

## Revendications

1. Procédé de détection de buses d'impression défectueuses dans des têtes d'impression d'une machine à imprimer à jet d'encre (4) avec un ordinateur (3, 6), pour lequel des modèles de test de buses (13, 15, 16) à plusieurs lignes sont imprimés pour la détection sur le support d'impression sous forme de feuilles d'impression (8), lesquels se composent d'un nombre déterminé n de lignes horizontales (12) imprimées périodiquement à la verticale, de lignes (14) équidistantes, qui sont disposées les unes au-dessous des autres dans le sens d'impression, pour lequel dans chaque ligne (12) du motif de test de buses (13), seules les n-ièmes buses d'impression d'une tête d'impression de la machine à imprimer à jet d'encre (7) sont actives et contribuent ainsi aux lignes (14) de la ligne (12) du motif de test de buses (13, 15, 16) et que, d'une ligne (12) à l'autre (12), les buses d'impression actives sont incrémentées, les motifs de test de buses (13, 15, 16) sont détectés par au moins un capteur d'images (5) et sont évalués par l'ordinateur (3, 6) pour déterminer les buses d'impression défectueuses,
**caractérisé en ce**
**que** l'ordre des lignes horizontales (12), disposées les unes au-dessous des autres dans la direction d'impression, de lignes (14) identiques, imprimées périodiquement à la verticale, varie d'une feuille d'impression (8) à l'autre.

2. Procédé selon la revendication 1,
**caractérisée en ce**
**que** le motif de test de buse multi-lignes (13, 15, 16) est imprimé sur le bord arrière de la feuille d'impression (8).

3. Procédé selon l'une des revendications précédentes,
**caractérisée en ce**
**que** l'ordre des lignes horizontales (12) de lignes (14) imprimées périodiquement à la verticale et équidistantes est adapté selon un modèle déterminé ou de manière aléatoire.

4. Procédé selon l'une des revendications précédentes,
**caractérisé en ce**
**que** la variation de l'ordre des lignes horizontales (12) de lignes (14) équidistantes imprimées périodiquement à la verticale s'effectue en continu par une incrémentation et un décalage systématiques des numéros de ligne respectifs dans le motif de test de buse (13, 15, 16).

5. Dispositif selon l'une des revendications 1 à 3,
**caractérisé en ce**
**que** la variation de l'ordre des lignes horizontales (12) de lignes (14) équidistantes, imprimées périodiquement à la verticale, s'effectue en continu par une modification aléatoire des numéros de ligne respectifs dans le motif de test de buse (13, 15, 16).

6. Procédé selon l'une des revendications précédentes,
**caractérisé en ce**
**que** la variation de l'ordre des lignes horizontales (12) de lignes (14) identiques imprimées périodiquement à la verticale s'effectue à chaque changement de feuille d'impression ou à partir d'un nombre déterminé de feuilles d'impression (8) imprimées.
